**Europäisches Patentamt**

**European Patent Office**

**Office européen des brevets**

(19)

(11) Veröffentlichungsnummer : **0 133 505 B2**

(12)
# NEUE EUROPÄISCHE PATENTSCHRIFT

(45) Veröffentlichungstag der neuen Patentschrift :
**16.06.93 Patentblatt 93/24**

(51) Int. Cl.$^5$ : **C01B 17/90, C01G 23/053**

(21) Anmeldenummer : **84108666.3**

(22) Anmeldetag : **23.07.84**

(54) **Verfahren zur Aufarbeitung von Dünnsäuren.**

(30) Priorität : **02.08.83 DE 3327769**

(43) Veröffentlichungstag der Anmeldung :
**27.02.85 Patentblatt 85/09**

(45) Bekanntmachung des Hinweises auf die
Patenterteilung :
**30.09.87 Patentblatt 87/40**

(45) Bekanntmachung des Hinweises auf die
Entscheidung über den Einspruch :
**16.06.93 Patentblatt 93/24**

(84) Benannte Vertragsstaaten :
**BE DE FR GB IT NL**

(56) Entgegenhaltungen :
**DE-A- 1 939 818**
**DE-A- 2 618 058**
**DE-A- 2 618 121**
**DE-A- 2 729 755**
**DE-A- 2 807 394**
**DE-B- 1 103 902**
**DE-B- 1 242 431**
**DE-B- 1 767 628**
**DE-C- 648 695**
**FR-A- 1 548 343**
**US-A- 233 149**
**US-A- 2 098 056**
**US-A- 3 210 156**
**E. Schmoll, "Aufbereitung von Abfallschwefel-**
**säure aus TiO2-Anlagen", veröff. in den**
**"Escher Wyss Mitteilungen", 2/1978-1/1979,**
**Seiten 17-20**
**Ullmanns Encyklopädie der technischen Che-**
**mie, 4. Auflage, Band 18, 1979, Verlag Chemie,**
**Weinheim, Seite 579.**
**Materialien 2/76 des Umweltbundesamtes**
**Berlin, Bericht des Arbeitskreises**
**"Rückstände aus der Titanoxid-Produktion";**
**Stand Dezember 1981, Publikationsvermerk:**
**Berlin 1982, Seiten 114-118**
**Aufbereitungs-Technik, 20. Jahrgang, Januar**
**1979, Wiesbaden, H. Hoidl, "Neue Anwen-**
**dungsgebiete für Doppelsiebband- pressen",**
**Seiten 198-202.**
**Eindampfen von Schwefelsäure mit Tauch-**
**brennern" von G. Gerlach, Chemie. Ing.**
**Techn., 42. Jahrgang, 1970, Seiten 452-456**

(56) Entgegenhaltungen :
**"Lakokrosocnye Materialy i Ikh Primenenie"**
**1975- Seiten 75-76 , I.P. Dobrovolskij et al,**
**"Reduction des Fremdstoffgehaltes in rege-**
**nerierter Hydrolyse-Säure".**
**Handbuch Randolf, Larson, "Theory of Parti-**
**culate Processes", 1971, Seite 147**
**E. Schmoll, "Aufbereitung von Abfallschwefel-**
**säure aus TiO2-Anlagen", veröffentlicht in den**
**"Escher Wyss Mitteilungen", 2/1978-1/1979,**
**Seiten 17-20.**
**E. Schmoll, "Aufbereitung von Abfallschwefel-**
**säure aus TiO2-Anlagen", veröff. in den**
**"Escher Wyss Mitteilungen", 2/1978-1/1979,**
**Seiten 17-20**

(73) Patentinhaber : **BAYER AG**
**W-5090 Leverkusen 1 Bayerwerk (DE)**

(72) Erfinder : **Gerken, Rudolf, Dr.**
**Rather Strasse 79**
**W-4150 Krefeld (DE)**
Erfinder : **Lailach, Günter, Dr.**
**Bodelschwinghstrasse 23**
**W-4150 Krefeld (DE)**
Erfinder : **Bayer, Eckhard, Dr.**
**Grevenbroicher Strasse 47**
**W-4150 Krefeld (DE)**
Erfinder : **Gutsche, Walter, Dr.**
**Johannes-Heynen Strasse 16**
**W-4150 Krefeld (DE)**

**EP 0 133 505 B2**

## Beschreibung

Die vorliegende Erfindung betrifft eine Verfahren zur Aufarbeitung von bei der $TiO_2$-Produktion nach dem Sulfat-Verfahren anfallenden Dünnsäuren.

Bei der Titandioxidproduktion nach der sogenannten Sulfat-Route fallen in großer Menge metallsulfathaltige Dünnsäuren an, deren Aufarbeitung und Rückführung der regenerierten Schwefelsäure in den Produktionsprozeß aus ökologischen und ökonomischen Gesichtspunkten wünschenswert ist.

Das Eindampfen dieser Dünnsäuren in herkömmlicher Weise stellt unter heutigen Aspekten keine wirtschaftliche Entsorgungsmöglichkeit dar.

So hat es in der Vergangenheit nicht an Vorschlägen gefehlt, wirtschaftlichere Alternativen zur Aufarbeitung von Dünnsäuren zu diskutieren.

Ein Vorschlag geht dahin, die Prozeßabwärme, wie sie beispielsweise in Kalzinieröfen in Form heißer Gase anfällt, direkt einzusetzen. Bisher war es jedoch nicht möglich, dieses Verfahren störungsfrei zu betreiben, weil verspritzende Tropfen der Salzhaltigen Säure so stark eingedampft werden, daß die Anlagenteile, in denen Gas und Säure in Kontakt kommen, binnen kurzer Zeit durch Salzkrusten blockiert werden.

Es ist auch ein Verfahren zur Aufarbeitung von Dünnsäure bekannt, die beim Einsatz von Ilmenit als $TiO_2$-Rohstoff anfällt, bei dem $FeSO_4 \cdot 7\,H_2O$ (« Grünsalz ») auskristallisiert wird und die verbleibende Dünnsäure in Vakuumumlaufverdampfern auf eine $H_2SO_4$-Konzentration von etwa 55 % eingedampft wird. Anschließend wird $FeSO_4 \cdot H_2O$ abfiltriert und in der Dünnsäure vor der Grünsalzabtrennung gelöst. Sofern die 55 %ige $H_2SO_4$ nicht verwendet werden kann, wie zur Düngemittelherstellung, wird sie auf eine Konzentration von 70% weiter eingedampft, und abermals $FeSO_4 \cdot H_2O$ abgetrennt, das ebenfalls in der Dünnsäure gelöst wird. (Escher-Wyss Mitteilungen 2/1978-1/1979 Seiten 17-20).

Aus der US-A-3 210 156 ist ein Verfahren zur Aufarbeitung von Dünnsäuren bekannt, wobei die Dünnsäure (22 %) durch Ausnutzung von Prozeßwärme auf einen $H_2SO_4$-Gehalt von ungefähr 30 % vorkonzentriert wird. Durch weitere Eindampfung mit Tauchbrennern wird eine Suspension mit einem $H_2SO_4$-Gehalt von 55 bis 70 % hergestellt ; die Suspension wird abgekühlt und die anfallenden Sulfate abgetrennt ; die Sulfate werden zusammen mit der anhaftenden Säure thermisch gespalten. Das entstandene Schwefeldioxid wird bei der Herstellung von Schwefelsäure eingesetzt und die zurückgewonnene Schwefelsäure wird nach einer weiteren Eindampfung auf eine höhere $H_2SO_4$-Konzentration in den $TiO_2$-Prozeß zurückgeführt.

Die wesentlichen Nachteile dieser Verfahrensweise sind darin zu sehen, daß einmal die gesamte Dünnsäureeindampfung mit Dampf als Energieträger geschieht, also keine Prozeßabwärmen genutzt werden, zum anderen alle in der Dünnsäure enthaltenden Sulfate außer dem abgetrennten Eisensulfat bei der Rückführung der Säure wieder in den Prozeß gelangen. Sie reichern sich an und müssen schließlich mit dünnen Waschwässern beseitigt werden.

Es bestand daher die Aufgabe, eine ökologisch und ökonomisch sinnvolles Verfahren zur Aufarbeitung von Dünnsäuren aus dem $TiO_2$-Sulfat-Prozeß bereitzustellen, welches die obengenannten Nachteile nicht aufweist.

Es wurde nun ein solches Verfahren gefunden, welches alle diese Forderungen erfüllt und welches unabhängig vom $TiO_2$-Rohstoff durchführbar ist.

Gegenstand der vorliegenden Erfindung ist ein Verfahren zur Aufarbeitung von bei der $TiO_2$-Produktion nach dem Sulfat-Verfahren anfallenden Dünnsäuren, wobei die Dünnsäuren einer Schwefelsäurekonzentration von 23 bis 28 % durch Ausnutzung von Prozeßwärme auf einen $H_2SO_4$-Gehalt von maximal 32 % vorkonzentriert, durch weitere Eindampfung mit einer mehrstufigen Vakuumzwangsumlaufverdampferanlage eine Suspension mit einem $H_2SO_4$-Gehalt (salzfrei) von 62 bis 70 % hergestellt. diese Suspension in einer mehrstufigen Rührkaskade Zur Auskristallisation der Sulfate während 10 bis 40 Stunden auf Temperaturen zwischen 40 bis 70°C, vorzugsweise 50 bis 65°C, abgebildet wird und auschließend die Sulfate durch Filtration abgetrennt werden die abgetrennten Sulfate zusammen mit der anhaftenden Säure thermisch gespalten und das dabei entstandene Schwefeldioxid bei der Herstellung von Schwefelsäure oder Oleum eingesetzt und die zurückgewonnene Schwefelsäure, gegebenenfalls nach einer weiteren Eindampfung auf eine $H_2SO_4$-Konzentration von 75 bis 85 %, in den $TiO_2$-Prozeß zurückgeführt wird.

Im folgenden soll dieses Aufarbeitungsverfahren genauer erläutert werden.

Zur Vorkonzentrierung der Dünnsäure kann vorteilhaft Prozeßwärme aus der Schwefelsäure-Produktion eingesetzt werden, die bei der $SO_3$-Absorption frei wird (DE-A-2 529 708 und DE-A-2 529 709).

Dabei wird die frei werdende Wärme im indirekten Wärmeaustausch aus der Absorberkreislaufsäure (120 bis 180 °C) an die im Kreislauf gepumpte Dünnsäure abgegeben, wobei diese von 40-80 °C auf 50 bis 100 °C erwärmt wird. Die Abführung der Wärme aus der Dünnsäure erfolgt nach dem Prinzip der Verdunstungskühlung durch Ausblasen mit Luft oder heißen Gasen, deren Temperatur unter dem Siedepunkt der Säure liegt. Dadurch wird eine Konzentrierung der Dünnsäure auf 28 bis 32 % $H_2SO_4$ erreicht, aber vermieden, daß Dünn-

2

säuretropfen so weit eindampfen, daß eine Verstopfung der Apparatur durch Metallsulfate erfolgt.

Es ist vorteilhaft, der Dünnsäure bei der Vorkonzentrierung zur Einhaltung der Maximalkonzentration schwache Waschsäuren aus der $TiO_2$-Produktion zuzusetzen.

Bei Dünnsäuren mit einem hohen Eisengehalt von über 3 % Fe empfiehlt es sich, bereits vor der beschriebenen Vorkonzentration eine Kristallisation und Grünsalzabtrennung vorzunehmen, um einer Eisensulfatabscheidung in der Apparatur vorzubeugen.

Besonders vorteilhaft erweist es sich, nach der Vorkonzentrierung ein Teil des Eisensulfates als Eisensulfat-Heptahydrat (Grünsalz) abzutrennen.

Die Kristallisation von Grünsalz aus der vorkonzentrierten Dünnsäure erfolgt vorzugsweise durch Vakuumkühlung auf 5-20 °C, bevorzugt 10-15 °C. Das kristallisierte Grünsalz kann durch Zentrifugieren oder Filtrieren von der Mutterlauge abgetrennt werden. Die Waschsäuren werden bevorzugt zur frischen Dünnsäure vor der Vorkonzentrierungsstufe zugemischt.

In einer bevorzugten Ausführungsform dieser Erfindung wird die Vakuumzwangsumlaufverdampfer-Anlage dreistufig betreiben, wobei die erste und dritte Stufe mit Dampf beheizt werden, während die zweite Stufe durch die Brüden aus der ersten Stufe beheizt wird.

Dabei wird die Säure, die noch einen wesentlichen Teil des Eisensulfates und alle anderen beim Rohstoffaufschluß zu Sulfat umgesetzten Nebenbestandteile enthält, in einer ersten Stufe, vorzugsweise bei 80 bis 120 °C und 0,4 bis 0,7 bar eingedampft, wobei Dampf als Heizmittel dient. Die Brüden der ersten Eindampferstufe dienen in einer zweiten Stufe als Heizmittel. In dieser Stufe erfolgt die Wasserverdampfung bei 50 bis 90 °C und 0,02 bis 0,06 bar. Vorteilhaft wird in einer dritten Verdampferstufe mit Dampf als Heizmittel eine geringe Menge Wasser verdampft, wobei die Bedingungen so gewählt werden (90-120 °C. 0,2 bis 0,6 bar), daß die Säure immer die für die Sulfatabtrennung optimale Konzentration (62 bis 70 % $H_2SO_4$, vorzugsweise 64-67 % $H_2SO_4$ als salzfreie Säure) erreicht.

Die anfallende Sulfat-Schwefelsäure-Suspension wird wie oben beschrieben in einer mehrstufigen Rührkaskade, während 10 bis 40 h auf 40 bis 70 °C, vorzugsweise 50 bis 65 °C, abgekühlt und anschließend filtriert. Die Filtration kann entweder mit Kammerpreßfiltern oder mit Vakuumfiltern erfolgen. In letzterem Fall ist es vorteilhaft, den Filterkuchen mechanisch durch Bandpreßfilter weiter von anhaftender Schwefelsäure zu befreien.

Die dem Filterkuchen noch anhaftende 62-70%ige Schwefelsäure kann durch Waschen mit Dünnsäure verdrängt werden.

Der Filterkuchen, der außer $FeSO_4 - H_2O$ weitgehend alle in der Dünnsäure enthaltenen Metallsulfate sowie anhaftende Schwefelsäure ehthält, wird durch thermische Spaltung bei 850 bis 1100 °C, vorzugsweise 900 bis 1 000 °C, zu $SO_2$, $O_2$, $H_2O$ und Metalloxiden zersetzt. Die thermische Spaltung geschieht vorteilhaft in einem konventionellen Fließbettreaktor oder einem Reaktor mit zirkulierendem Wirbelbett, kann aber auch in Drehrohröfen oder anderen geeigneten Reaktoren durchgeführt werden. Als Energieträger für die stark endothemen Reaktionen eigenen sich Schwefelkiese, Elementarschwefel. Kohle oder Heizöl. Das gebildete $SO_2$ wird in an sich bekannter Weiser zu reiner Schwefelsäure, vorzugsweise zu Oleum, umgesetzt.

Die Metalloxide können unter anderem in der Zementindustrie eingesetzt werden. Die in $TiO_2$-Rohstoff enthaltenen Nichteisenmetalle gelangen also nicht ins Abwasser.

Die 62-70 %ige rückgewonnene Schwefelsäure kann zusammen mit Oleum direkt beim. $TiO_2$-Rohstoffaufschluß eingesetzt werden. Die freiwerdende Mischungswärme von rückgewonnener Säure und Oleum führt dabei zum Starten der Aufschlußreaktion. Ist die Mischungswärme zu hoch, so daß der Reaktionsbeginn zu stürmisch erfolgt, kann die rückgewonnene Säure mit 96-100 %iger Schwefelsäure oder mit Oleum gemischt werden, so daß nach Kühlung dieser Mischung eine 65-80 %ige Säure zur Verfügung steht. die im Gemisch mit weiterem Oleum zum gewünschten Reaktionsverlauf führt.

Eine vorteilhafte Ausführung des Verfahrens besteht darin, daß die zur Rückgewinnung gelangende Dünnsäure statt der üblichen 18 bis 23 % $H_2SO_4$ einen Gehalt von 23 bis 28 % $H_2SO_4$ hat. Das kann durch zwei voneinander unahängige Maßnahmen erreicht werden. Erstens kann bei der Filtration des $TiO_2$-Hydrolysats die Konzentration der abfließenden Dünnsäure ständig überwacht werden, so daß, vorzugsweise automatisch, eine Trennung in relativ konzentrierte Dünnsäure und stark verdünnte « Schwachsäure » erfolgt. Zweitens können bei der $TiO_2$-Hydrolyse diese Schwachsäure oder andere verdünnte Säuren aus dem Prozeß anstelle von Wasser zugesetzt werden.

Die zurückgewonnene Schwefelsäure kann natürlich auch für andere Zwecke verwendet werden wie zur Herstellung von Düngemitteln.

Beispiel 1

a) 40 t/h Dünnsäure mit

| 20 % | H$_2$SO$_4$ |
| 5,4 % | FeSO$_4$ |
| 1,5 % | Al$_2$(SO$_4$)$_3$ |
| 1,8 % | MgSO$_4$ |
| 0,07 % | Cr$_2$(SO$_4$)$_3$ |
| 0,12 % | VOSO$_4$ |

wurden mit 40 °C in eine Vorkonzentrierungsanlage (Fa. Lurgi) eingespeist. Die in dieser Anlage im Kreislauf geförderte Dünnsäure wurde in Röhrenwärmetauschern durch Absorberkreislaufsäure von 70 auf 90 °C aufgeheizt und in einem Venturiwäscher mit nachgeschaltetem Waschturm mit Luft auf 70 °C direkt gekühlt. Dabei wurde die Luft (80 000 m³/h) mit Wasserdampf beladen. Aus der Dünnsäure wurden 11,4 t/h H$_2$O verdampft, so daß 28,6 t/h Dunnsäure mit 28 % H$_2$SO$_4$ und 7,6 % FeSO$_4$ mit 90 °C aus dieser Anlage ausgespeist wurden.

b) Diese Dünnsäure wurde in eine 2-stufige Vakuumkühl- und Kristallisationsanlage eingespeist und auf 10 °C abgekühlt. Dabei verdampften 2,4 t H$_2$O/h. Außerdem kristallisierten 1,6 t FeSO$_4 \cdot$ 7 H$_2$O/h zusammen mit 0,2 t MgSO$_4 \cdot$ 7 H$_2$O/h. Nach Abtrennung des Grünsalzes (FeSO$_4 \cdot$ 5 H$_2$O) mittels Vakuumbandfilter und Waschung mit Wasser verblieben 24,8 t/h Dünnsäure mit

| 32,3 % H$_2$SO$_4$ | 2,42 % MgSO$_4$ |
| 5,25 % FeSO$_4$ | 0,11 % Cr$_2$ (SO$_4$)$_3$ |
| 2,42 % Al$_2$ (SO$_4$)$_3$ | 0,2 % VOSO$_4$ |

c) Diese Dünnsäure wurde in eine 3-stufige Vakuumzwangsumlaufverdampfer-Anlage (Fa. Rosenlen Ltd., Finnland) eingespeist. In der ersten Stufe erfolgte die Verdampfung bei 100 °C und 0,5 bar mit 5 bar Dampf als Heizmittel. Bei einem Dampfverbrauch von 7 t/h wurden 4,2 t/h H$_2$O verdampft. Diese Brüden wurden als Heizmittel in den Wärmetauscher der 2. Stufe geleitet. In der 2. Stufe erfolgte die Verdampfung bei 65 °C und 0,05 bar. Die Brüden (4,6 t H$_2$O/h) wurden direkt mit Kühlwasser kondensiert. Aus der 2. Stufe floß die Sulfat-Schwefelsäure-Suspension in die 3. Verdampferstufe, die wieder mit 5 bar-Dampf beheizt wurde. Hier wurde eine Konzentration von 67 % H$_2$SO$_4$ (salzfrei) durch Verdampfung bei 80 °C und 0,03 bar eingestellt. Der Dampfverbrauch der Anlage lag bei 0,85 t/t H$_2$O-Verdampfung.

d) Die erhaltene Suspension wurde in einer dreistufigen Rührkaskade während 30 h von 80 auf 60 °C abgekühlt und mit einem Vakuumbandfilter mit einer Leistung von 0,8 m³ Filtrat/h · m² Ansaugfläche filtriert. Ohne « Waschung » fielen 10,7 t/h Filtrat und 4 t/h Filterkuchen an. Der Filterkuchen enthielt 26,7 % H$_2$SO$_4$, entsprechend 40 % Haftfeuchte. Durch Verdrängen der Haftfeuchte mit 10 %iger Waschsäure aus dem TiO$_2$-Prozeß wurden zusätzlich 1,1 t/h konzentrierte Säure aus dem Filterkuchen gewonnen. Insgesamt wurden 11,8 t/h Säure mit

| 65,2 % H$_2$SO$_4$ | 1,3 % MgSO$_4$ |
| 0,15 % FeSO$_4$ | 0,07 % Cr$_2$ (SO$_4$), |
| 1,2 % Al$_2$ (SO$_4$)$_3$ | 0,006 % VOSO$_4$ |

zurückgewonnen, die zusammen mit Oleum beim TiO$_2$-Rohstoffaufschluß wieder eingesetzt wurden. Außerdem fielen 3,7 t/h Filterkuchen an mit 13,8 % H$_2$SO$_4$ und 64 % MeSO$_4$.

e) Der Filterkuchen wurde zusammen mit Schwefelkies, Schwefel und Braunkohle in einen Fließbettreaktor eingespeist und bei Temperaturen zwischen 950 und 100 °C thermisch gespalten. Der im Abhitzekessel und in der EGR (elektostatische Gasreinigung) abgeschiedene Abbrand (2,8 t/h) enthielt 65 % Fe$_2$O$_3$. Das gereinigte Röstgas wurde in einer Schwefelsäure-Kontaktanlage zu Oleum umgesetzt, wobei die Prozeßwärme aus der SO$_3$-Absorption bei der Vorkonzentrierung genutzt wurde.

Beispiel 2

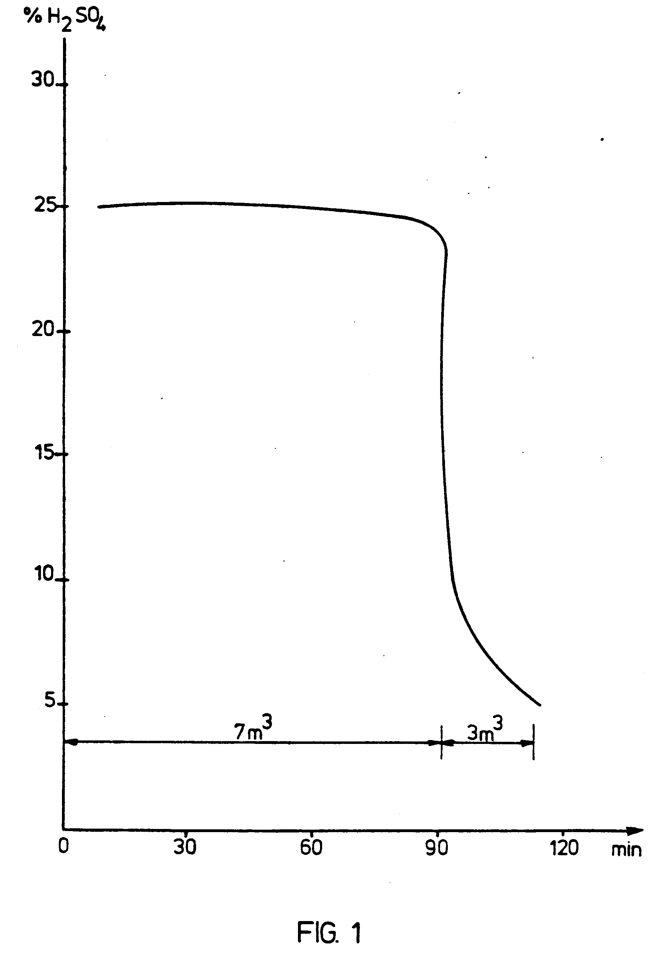

Die Überwachung der TiO$_2$-Hydrolysat-Filtration ergab, daß sich während der chargenweisen Filtration die H$_2$SO$_4$-Konzentration des Filtrates entsprechend Fig. 1 änderte.

Durch Umstellen des Filtratstromes nach 90 min Filtrationsdauer konnten bei einer Charge 7 m³ Dünnsäure mit 25 % H$_2$SO$_4$ und 3 m³ « Waschsäure » mit ca. 10 % H$_2$SO$_4$ abgetrennt werden. Durch teilweisen Einsatz dieser « Waschsäure » anstelle von Wasser bei der TiO$_2$-Hydrolyse wurde die in Fig. 1 dargestellte Kurve zu höhren H$_2$SO$_4$-Konzentrationen verschoben, so daß während 100 min Filtrationsdauer 7 m³ Dünnsäure mit 28 % H$_2$SO$_4$ abgetrennt werden konnten.

Zur Dünnsäure-Entsorgung gelangten nach obiger Verbesserung der Dünnsäureabtrennung statt 40 t/h (entspr. Beispiel 1) nur 28,6 t/h Dünnsäure mit

| 28 % H$_2$SO$_4$ | 2,52 % MgSO$_4$ |
| 7,56 % FeSO$_4$ | 0,10 % Cr$_2$ (SO$_4$)$_3$ |
| 2,10 % Al$_2$ (SO$_4$)$_3$ | 0,17 % VOSO$_4$ |

a) Die Dünnsäure (40 °C) wurde direkt in eine 2 stufige Vakuumkühl- und Kristallisationsanlage eingespeist und auf 7 °C abgekühlt. Dabei verdampfte 1 t $H_2O$. Es wurden die gleichen Mengen Grünsalz wie bei Beispiel 1 (b) angetrennt.

b) Die bei der Filtration des Grünsalzes gewonnene Dünnsäure: 26,0 t/h mit

| | |
|---|---|
| 30,8 % $H_2SO_4$ | 2,4 % $MgSO_4$ |
| 5,0 % $FeSO_4$ | 0,11 % $Cr_2(SO_4)_3$ |
| 2,3 % $Al_2(SO_4)_3$ | 0,19 % $VOSO_4$ |

wurde mit 12,9 t/h Waschsäuren (mit 8 % $H_2SO_4$) gemischt und mit 21 °C in die Vorkonzentrierungsanlage entsprechend Beispiel 1 (a) eingespeist. Dort wurden bei gleichem Wärmeangebot 10,7 t/h $H_2O$ verdampft, so daß 28,2 t/h Dünnsäure mit 32 % $H_2SO_4$ und 5,6 % $FeSO_4$ mit 90 °C in die Vakuumverdampferanlage abgegeben wurden.

c) Bei der Eindampfung entsprechend Beispiel 1 (c) wirkte sich die hohe Temperatur der eingespeisten Dünnsäure vorteilhaft aus. Für die Verdampfung ergaben sich folgende Daten :

| Stufe | $H_2O$-Verdampfung t/h | Dampfverbrauch t/h |
|---|---|---|
| 1 | 4,7 | 5,9 |
| 2 | 5,3 | – |
| 3 | 1,45 | 1,8 |
| | 11,45 | 7,7 |

Der spezifische Dampfverbrauch lag bei 0,67 t/t $H_2O$-Verdampfung.

d) Die erhaltene Suspension wurde entsprechend Beispiel 1 (d) während 26 h auf 60 °C gekühlt und mit Vakuumdrehfiltern filtriert (0,4 m³ Filtrat/h · m² Filterfläche). Dabei fielen 12,2 t/h Filtrat und 4,55 t/h Filterkuchen mit 26,7 % $H_2SO_4$ an. Durch Nachentfeuchten des Filterkuchens mit einem Bandpreßfilter wurden noch 1,05 t/h Schwefelsäure gewonnen. Der verbleibende krümelige Filterkuchen (3,5 t/h) enthielt 15,1 % $H_2SO_4$, entsprechend 23,1 % Haftfeuchte.

e) Insgesamt wurden 13,25 t/h Schwefelsäure mit 65 % $H_2SO_4$ zurückgewonnen. Der Säureaufarbeitungsgrad lag bei diesem Beispiel ca. 13% höher als bei Beispiel 1, wobei durch die verbesserte Dünnsäureabtrennung bei der $TiO_2$-Produktion der Gesamtenergiebedarf bei beiden Beispielen etwa gleich groß war.

f) Ein Teil des Filterkuchens wurde mit Brikettabrieb mit Verhältnis 4 : 1 gemischt und in einer Pilotanlage nach dem Prinzip der zirkulierenden Wirbelschicht (DE-C-1 767 628) bei 980 °C gespalten. Der ausgetragene Abbrand enthielt 41,5 % $Fe_2O_3$.

g) Ein Teil der rückgewonnenen Schwefelsäure wurde in einer zweistufigen Pilotanlage im Kontakt mit 450 °C heißen Rauchgasen auf 78 % $H_2SO_4$ eingedampft. Aus der eingedampften Säure fielen beim Abkühlen Salze aus. Die Säure hatte nach dem Filtrieren folgende Zusammensetzung :

| | |
|---|---|
| 78,4 % $H_2SO_4$ | 1,0 % $MgSO_4$ |
| 0,11 % $FeSO_4$ | 0,10 % $Cr_2(SO_4)_3$ |
| 2,3 % $Al_2(SO_4)_3$ | 0,016 % $VOSO_4$ |

## Patentansprüche

1. Verfahren zur Aufarbeitung von bei der $TiO_2$-Produktion nach dem Sulfat-Verfahren anfallender Dünnsäure, dadurch gekennzeichnet, daß

a) die Dünnsäure einer Schwefelsäurekonzentration von 23 bis 28 % durch Ausnutzung von Prozeßwärme auf einen $H_2SO_4$-Gehalt von maximal 32 % vorkonzentriert,

b) durch weitere Eindampfung mit einer mehrstufigen Vakuumzwangsumlaufverdampferanlage eine Suspension mit einem $H_2SO_4$-Gehalt (salzfrei) von 62 bis 70 % hergestellt,

c) diese Suspension in einer mehrstufigen Rührkaskade zur Auskristallisation der Sulfate während 10 bis 40 Stunden auf Temperaturen zwischen 40 bis 70° C, vorzugsweise 50 bis 65° C, abgekühlt wird und anschließend die Sulfate durch Filtration abgetrennt werden,

d) die abgetrennten Sulfate zusammen mit der anhaftenden Säure thermisch gespalten und

e) das dabei entstandene Schwefeldioxid bei der Herstellung von Schwefelsäure oder Oleum einge-

5

setzt wird und

f) die zurückgewonnene Schwefelsäure, gegebenenfalls nach einer weiteren Eindampfung auf eine $H_2SO_4$-Konzentration von 75 bis 85 %, in den $TiO_2$-Prozeß zurückgeführt wird.

2. Verfahren gemäß Anspruch 1, dadurch gekennzeichnet, daß bei der Filtration des $TiO_2$-Hydrolysates eine Trennung des Filtrats in relative konzentrierte Dünnsäure und verdünnte Waschsäure erfolgt.

3. Verfahren gemäß einem der Ansprüche 1 oder 2, dadurch gekennzeichnet, daß der Dünnsäure bei der Vorkonzentrierung zur Einhaltung der Maximalkonzentration verdünnte Waschsäuren aus der $TiO_2$-Produktion zugesetzt werden.

4. Verfahren gemäß einem der Ansprüche 1 bis 3, dadurch gekennzeichnet, daß zur Erhöhung der Dünnsäurekonzentration bei der $TiO_2$-Hydrolyse verdünnte Waschsäuren anstelle von Wasser zugesetzt werden.

5. Verfahren gemäß einem der Ansprüche 1 bis 4, dadurch gekennzeichnet, daß nach der Vorkonzentrierung ein Teil des Eisensulfates als Eisensulfat-Heptahydrat abgetrennt wird.

6. Verfahren gemäß einem der Ansprüche 1 bis 5, dadurch gekennzeichnet, daß die Vakuumzwangsumlaufverdampferanlage dreistufig betrieben wird, wobei die erste und dritte Stufe mit Dampf beheizt werden, während die zweite Stufe durch die Brüden auf der ersten Stufe beheizt wird.

7. Verfahren gemäß Anspruch 1, dadurch gekennzeichnet, daß die 62- bis 70%ige Schwefelsäure aus dem bei der Filtration anfallenden Filterkuchen mit Dünnsäure verdrängt wird.

8. Verfahren gemäß einem der Ansprüche 1 oder 7, dadurch gekennzeichnet, daß die Menge des anfallenden Filterkuchens durch eine Nachentfeuchtung mit Bandpreßfiltern verringert wird.

9. Verfahren gemäß einem der Ansprüche 1 bis 8, dadurch gekennzeichnet, daß die thermische Spaltung in einem Fließbettreaktor oder in einem Reaktor mit zirkulierender Wirbelschicht bei Temperaturen zwischen 850 und 1100° C, vorzugsweise 900 bis 1000°C, erfolgt.

## Claims

1. A process for the working up of thin acid obtained from the production of $TiO_2$ by the sulphate process, characterised in that

a) the thin acid having a sulphuric acid concentration of from 23 to 28% is preconcentrated to an $H_2SO_4$ content of at most 32% by utilizing the heat of the process,

b) a suspension having an $H_2SO_4$ content (salt-free) of from 62 to 70% is prepared by further evaporation in a multistage forced rotation vacuum evaporator,

c) this suspension is cooped for 10 to 40 hours to temperatures of from 40 to 70°C, preferably from 50 to 65°C, in a multistage stirrer cascade for crystallisation of the sulphates and the sulphates are thereafter separated by filtration,

d) the separated sulphates are thermally decomposed together with the adhering acid and

e) the resulting sulphur dioxide is used for the preparation of sulphuric acid or oleum and

f) the recovered sulphuric acid is returned to the $TiO_2$ process, optionally after further concentration by evaporation to an $H_2SO_4$ concentration of from 75 to 85%.

2. A process according to Claim 1, characterised in that when filtration of the $TiO_2$ hydrolysate takes place, the filtrate is separated into a relatively concentrated thin acid and a dilute washing acid.

3. A process according to one of the Claims 1 or 2, characterised in that during the preconcentration, dilute washing acids from the production of $TiO_2$ are added to the thin acid for maintaining the maximum concentration.

4. A process according to one of the Claims 1 to 3, characterised in that dilute washing acids are added for the $TiO_2$ hydrolysis instead of water in order to increase the concentration of thin acid.

5. A process according to one of the Claims 1 to 4, characterised in that part of the iron sulphate is separated as iron sulphate heptahydrate after the preconcentration.

6. A process according to one of the Claims 1 to 5, characterised in that the forced rotation vacuum evaporator installation is operated in three stages, the first and third stage being heated with steam while the second stage is heated by the vapours from the first stage.

7. A process according to Claim 1, characterised in that the 62 to 70% sulphuric acid is displaced from the filter cake of the filtration by thin acid.

8. A process according to one of the Claims 1 or 7, characterised in that the quantity of filter cake obtained is reduced by a subsequent removal of moisture by means of belt pressure filters.

9. A process according to one of the Claims 1 to 8, characterised in that the thermal decomposition takes place in a fluidized bed reactor or in a reactor with circulating fluidized layer at temperatures of from 850 to 1100°C, preferably from 900 to 1000°C.

## Revendications

1. Procédé de purification d'un acide dilué obtenu lors de la production de $TiO_2$ selon le procédé au sulfate, caractérisé en ce que :
   a) on soumet l'acide dilué, ayant une concentration en acide sulfurique de 23 à 28 %, en utilisant de la chaleur provenant du procédé, à une préconcentration jusqu'à une teneur en $H_2SO_4$ d'au maximum 32 %,
   b) par une concentration supplémentaire par évaporation à l'aide d'une installation d'évaporation avec recyclage forcé sous vide, on prépare une suspension ayant une teneur en $H_2SO_4$ (sans sel) de 62 à 70 %,
   c) on refroidit cette suspension pendant 10 à 40 h à des températures de 40 à 70°C, de préférence de 50 à 65°C, dans une cascade d'agitateurs à plusieurs étages pour la cristallisation des sulfates et ensuite on sépare les sulfates par filtration,
   d) on soumet les sulfates séparés, avec l'acide qui y adhère, à une scission thermique et
   e) on utilise le bioxyde de soufre ainsi obtenu pour préparer de l'acide sulfurique ou de l'oléum et
   f) on recycle vers le procédé de production de $TiO_2$ l'acide sulfurique récupéré, éventuellement après une concentration supplémentaire par évaporation jusqu'à une concentration en $H_2SO_4$ de 75 à 85 %.

2. Procédé selon la revendication 1, caractérisé en ce que, lors de la filtration de l'hydrolysat de $TiO_2$, il se produit une séparation du filtrat en acide dilué relativement concentré et acide dilué de lavage.

3. Procédé selon l'une des revendications 1 ou 2, caractérisé en ce qu'on ajoute des acides de lavage dilués, provenant de la production de $TiO_2$, à l'acide dilué, lors de la préconcentration, pour maintenir la concentration maximale.

4. Procédé selon l'une des revendications 1 à 3, caractérisé en ce que, pour élever la concentration de l'acide dilué, on ajoute lors de l'hydrolyse de $TiO_2$ des acides de lavage dilués au lieu d'eau.

5. Procédé selon les revendications 1 à 4, caractérisé en ce que, après la préconcentration, on sépare une partie du sulfate de fer sous forme de sulfate de fer heptahydraté.

6. Procédé selon l'une des revendications 1 à 5, caractérisé en ce qu'on fait fonctionner en trois étages l'installation d'évaporation avec recyclage forcé sous vide, en chauffant par de la vapeur d'eau les premier et troisième étages, cependant que le second étage est chauffé par les vapeurs provenant du premier étage.

7. Procédé selon la revendication 1, caractérisé en ce qu'on déplace du gâteau de filtre obtenu lors de la filtration l'acide sulfurique ayant une concentration de 62 à 70 %.

8. Procédé selon l'une des revendications 1 à 7, caractérisé en ce qu'on diminue, par un enlèvement subséquent d'humidité à l'aide de filtres-presses à bande, la quantité du gâteau de filtre obtenu.

9. Procédé selon l'une des revendications 1 à 8, caractérisé en ce que la scission thermique se produit dans un réacteur à lit fluidisé ou dans un réacteur à couche tourbillonnaire en circulation, à des températures comprises entre 850 et 1 100°C, avantageusement entre 900 et 1 000°C.

FIG. 1